Europäisches Patentamt

European Patent Office

Office européen des brevets

(11) Publication number: **0 054 761**
**B1**

(12) **EUROPEAN PATENT SPECIFICATION**

(45) Date of publication of patent specification: **19.03.86**

(51) Int. Cl.⁴: **C 08 F 8/44, C 08 L 101/00**

(21) Application number: **81109960.5**

(22) Date of filing: **27.11.81**

(54) Low molecular weight copolymer salts.

(30) Priority: **22.12.80 US 219144**
**29.12.80 US 220872**
**02.01.81 US 222197**
**25.09.81 US 305671**

(43) Date of publication of application:
**30.06.82 Bulletin 82/26**

(45) Publication of the grant of the patent:
**19.03.86 Bulletin 86/12**

(84) Designated Contracting States:
**DE FR GB IT**

(56) References cited:
**FR-A-1 476 033**
**GB-A-1 602 479**
**US-A-3 264 272**
**US-A-3 986 995**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Albee, Paul Joseph, Jr.**
**3204 Adams Drive**
**Bensalm Pennsylvania 19020 (US)**
Inventor: **Burdick, Patricia Elaine**
**89 N.Beverwyck Road No. 3**
**Lake Hiawatha New Jersey 07034 (US)**
Inventor: **Wrozina, Joseph Ignatius**
**27 Grove Street**
**Tenafly New Jersey 07670 (US)**
Inventor: **Auger, Christopher John**
**41 Nachtegalenlaan**
**B-1980 Tervuren (BE)**

(74) Representative: **Collier, Jeremy Austin Grey**
**et al**
**J.A.Kemp & Co. 14, South Square Gray's Inn**
**London WC1R 5EU (GB)**

The file contains technical information
submitted after the application was filed and
not included in this specification

Courier Press, Leamington Spa, England.

# 0 054 761

## Description

Background of the invention

This invention relates to an ethylene alpha,beta-ethylenically unsaturated carboxylic·acid copolymer salt, and to the preparation and use as polymer lubricants and dispersion aids of ethylene alpha,beta-ethylenically unsaturated copolymer salts; more particularly, this invention relates to metallic salts of low molecular weight copolymers of ethylene and an alpha,beta-ethylenically unsaturated carboxylic acid.

It is known in the art to produce ionic metal salts from copolymers of at least one alpha-olefin of a general formula $RCH=CH_2$ where R is a radical selected from the class consisting of hydrogen and alkyl radicals having from 1 to 8 carbon atoms, and an alpha,beta-ethylenically unsaturated carboxylic acid. Such ionic hydrocarbon polymers and processes for preparing them, as well as processes for preparing ionically crosslinked copolymers are described in U.S. Patent Nos. 3,264,272; 3,649,578; 3,969,434; 3,404,134; 3,789,035; 3,970,626; and 3,779,952.

French Patent No. 1,306,590 discloses waxes which result from the copolymerization of ethylene, and unsaturated acids partially or completely neutralized with sodium, potassium and ammonium cations.

U.S. Patent No. 3,779,952 discloses salts of polymer acids having a molecular weight of at least 500, and cations of metals from Group III-VA of the Periodic Table of Elements.

A review of the art, including the above-noted patents, shows that the prior art copolymer salts and processes for making them are generally directed to salts made from relatively high molecular weight copolymers. The reaction is generally carried out at superatmospheric pressures as high as 68.9 MPa (10,000 psi).

Attempts to form metallic low molecular weight copolymer salts of ethylene and alpha,beta-ethylenically unsaturated carboxylic acids at atmospheric pressure or higher pressures have resulted in reaction product volatiles being trapped in the low molecular weight copolymer salt reaction product. Discoloration often results as a result of excessive exposure to heat and the presence of oxygen at elevated temperatures during the preparation of these low molecular weight copolymer acid salts.

Lubricants are added to polymers to decrease melt sticking of the polymer, to improve the flow properties, and make it easier to process the polymers. Lubricants generally work to reduce the melt viscosity of the polymer at the processing temperature and/or to reduce the friction between the polymer and metal surfaces of processing machinery.

The state-of-the-art of polymer lubricants is reviewed in Modern Plastics Encyclopedia, 1979—1980, pages 198—202, at page 675.

Lubricants for polymers which are known in the art include: paraffin wax; polyethylene waxes; calcium stearate; stearate esters, alcohols, and acids; montan-based esters, acids, and salts; stearate salts; and amide waxes.

Lubricants can act internally or externally depending on their compatibility with the polymer. Generally the lubricant has a lower melting temperature than the polymer which it is lubricating. An external acting lubricant does not blend well with the polymer and maintains its separate integrity. The external lubricant melts and reduces polymer to metal friction which can cause stickiness between the process machine and polymer.

Internal and external lubrication characteristics are influenced by the degree of compatibility between the lubricant and the polymer. Compatibility by definition is the ability of two or more constituents to mix and remain homogeneously dispersed in one another. Physical compatibility depends on process conditions and physical properties of the lubricant and polymer. Physical properties considered are hardness and viscosity. Chemical compatibility is based upon chemical structure and interaction of the constituents such as the degree of solubility between the melted lubricant and polymer melt.

The more compatibilty between a lubricant and the polymer, whether it is chemical or physical, the more internally the lubricant functions. An internal acting lubricant does not only act at the surface of the polymer, lubricating as it is processed. The lubrication occurs inside the polymer melt as well. The lubricant, if an efficient solvent, forms a continuous solvating layer of molecules around the chain segments of the polymer, decreasing the amount of chain-to-chain contact as well as the chain-to-metal contact on the surface. The internal lubricant intermingles with the polymer melt and forms an intimate matrix. An internal acting lubricant blends into the body of the polymer and affects the flow properties of the polymer. The internal lubricant reduces the polymer-to-polymer friction which would reduce power consumption necessary during processing.

The external function of the lubricant is determined by the incompatibility between the lubricant and the molecule. The more incompatible the lubricant and the polymer are, the more the lubricant acts at the surface of the polymer melt easing the polymer's way through the machinery, such as an extruder. The external lubricant decreases the friction between a metal surface and the polymer.

The amount of lubricant external to the polymer is critical when the polymer is processed. Too much lubricant causes slippage, eliminating the friction necessary for the movement of polymer through the barrel of an extruder. This results in a decrease in output and torque. Polymers are more sensitive to external over-lubrication than to internal over-lubrication. Therefore, the concentration of external lubricants is generally much lower than that of internal lubricants.

It is known in the art to use ionic copolymer additives in various polymers to improve properties. The

2

ionic copolymers disclosed in the art are made from copolymers of alpha-olefins and alpha,beta-ethylenically unsaturated carboxylic acid. However, these copolymers are generally of higher molecular weights and are used to improve polymer properties unrelated to processing, such as impact resistance. Examples of these are U.S. Patent No. 3,264,272 and U.S. Patent Nos. 3,404,134, 3,347,957 and 4,210,579. The high molecular weight of the copolymer acids used to make the ionic copolymers are reflected by the fact that these higher molecular weight copolymers have measurable melt indexes, and that they can be processed by milling.

Low molecular polyethylene homopolymers have been used as dispersion aids in polymers in which they are compatible. However, low molecular weight homopolymers cannot be used as dispersion aids in polyamides, polystyrene, polycarbonates or polyesters due to incompatibility.

The present invention provides a low molecular weight copolymer salt of a copolymer acid comprised of at least 75 mol percent ethylene and from 0.2 to 25 mol percent of an alpha,beta-ethylenically unsaturated carboxylic acid, having from 3 to 8 carbon atoms, the copolymer acid being up to 100% neutralized with cations of metals selected from Group IIA of the Periodic Table of Elements, the copolymer acid having a number average molecular weight from 500 to 6000. The copolymer acid has a number average molecular weight of from 500 to 6000, preferably from 1,000 to 6,000, and more preferably from 1,000 to 3,500.

Examples of alpha,beta-ethylenically unsaturated carboxylic acids include acrylic acid, methacrylic acid, ethacrylic acid, itaconic acid, maleic acid, fumaric acid and monoesters of other dicarboxylic acids such as methyl hydrogen maleate, methyl hydrogen fumarate, ethyl hydrogen fumarate, and maleic anhydride which behaves like an acid in the present invention. Preferred metal cations are magnesium, calcium and barium, with calcium cations being most preferred. Cation containing materials can include metal: oxides, hydroxides, acetates, methoxides, nitrates, carbonates, and bicarbonates. Cation containing materials which are illustrated in the examples below include calcium hydroxide, calcium acetate, magnesium oxide and zinc acetate. The copolymer acid can be neutralized up to 100%. It is preferred to neutralize from 10% to 60%, and more preferably from 25% to 60%, of the carboxyl groups of the copolymer acids. A preferred calcium neutralized copolymer acid is neutralized from 25% to 50%.

The copolymer acid reacts in a neutralization reaction with the cation of the cation containing material to form the copolymer salt. Alternatively, the alpha,beta-ethylenically unsaturated carboxylic acid can first be neutralized and this acid salt can then be copolymerized with ethylene to form the low molecular weight polymer of the present invention.

The use of controlled concentrations of the divalent metal ion with the low molecular weight copolymer acid, and preferably where the copolymer is of ethylene and acrylic acid, enables the amount of crosslinking, and thereby the properties to be controlled. The divalent metal cation provides a site for two carboxyl groups on the same or different polymer chains to bond. The acid content of the copolymer acid can also be used to control the degree of crosslinking. Therefore, the amount of ionic crosslinking can be controlled by the amount of carboxyl groups on the copolymer acid, and by the percent neutralization of the carboxyl groups.

The neutralization process results in a copolymer salt having unique properties. In the solid state, the copolymer salts become tougher and more brittle than the copolymer acids from which they are formed. The copolymer salts are grindable to a powderlike consistency. Upon heating, the ionic crosslinks begin to be destroyed and the viscosity decreases. As the ionic crosslinks are broken, the properties of the melt approaches those of the copolymer acid. In the present invention, the copolymer acid has a low molecular weight and low viscosity. The melt flows are generally not satisfactory for typical thermoplastic melt fabricable operations.

A particularly preferred copolymer salt is one derived from a copolymer acid which is an ethylene and acrylic acid copolymer having a molecular weight of 1,000 to 3,500, and neutralized with a calcium or magnesium cation. Preferably, the cation-containing material used to neutralize the copolymer acid is a hydroxide, oxide, oxalate or acetate.

In accordance with the invention there is also provided a method of making a copolymer salt from a copolymer acid having a number average molecular weight of 500 to 6000 formed from ethylene and an alpha,beta-ethylenically unsaturated carboxylic acid having at least one carboxylic acid group, the copolymer acid being neutralized by cations having a valence of 1 to 3, comprising the steps of:

feeding the copolymer acid and a cation containing material to a reaction vessel;

maintaining a subatmospheric pressure in the reaction vessel for at least a portion of the reaction time; mixing the reacting mixture within the reaction vessel; and

maintaining the temperature within the reaction vessel above the melting point of the copolymer acid.

During this method, the reaction vessel is maintained below atmospheric pressure for at least a portion of the time, so that the oxygen content of the reaction vessel is minimized and volatile reaction products are removed. Also during the reaction, the reacting mass is continually mixed within the reacting vessel. Additionally, the temperature within the reaction vessel is controlled and maintained above the polymer melting point. The reaction can proceed until no volatiles are observed or measured coming from the reacting mass. It is to be recognized that although the description and examples to follow are directed to a batch type process, the process of the present invention is adaptable to a continuous process.

A preferred embodiment of the method of the invention is where the copolymer acid has an acid number from 40 to 160, and a number average molecular weight of from 500 to 6000, preferably from 1,000 to 6,000 and more preferably from 1,000 to 3,500. The copolymer acid is preferably an ethylene/acrylic acid copolymer and the cation containing material is preferably derived from a metal from Group IA, IIA, IIB or IIIA of the Periodic Table of Elements.

The copolymer acid and cation containing material are fed to a reaction vessel. The reaction begins to take place soon after the copolymer salt and cation containing material are fed into the reactor vessel. To ensure a uniform product, the copolymer salt and cation containing material are mixed in the vessel. The reaction vessel is heated to and maintained at a temperature above the melting point of the polymer, preferably from 120°C to 300°C, more preferably from 140°C to 260°C, and most preferably from 180°C to 220°C.

The temperature within the reaction vessel is controlled to ensure volatilization of the volatilizable reaction products as they are produced. The predominant volatile is water produced on neutralization of the copolymer acid. It has been found that the volatiles of the preferred copolymer salts are removed resulting in a uniform copolymer salt free of volatiles when heated to above a lower limit, preferably 180°C. Yet by maintaining an upper limit on temperature, preferably below 220°C, the copolymer salts do not experience deleterious effects of heat, such as discoloration, particularly when oxygen is present.

Even with the reacting mass continually mixed, and a high enough temperature maintained for a sufficient length of time, it has been found that the pressure must be maintained below atmospheric pressure for at least a portion of the time. Preferably, the pressure is reduced to from 50 kPa (15 inches of mercury) up to 101.3 kPa (29.9 inches of mercury less than one atmosphere). More preferably, the pressure is reduced to from 67.7 to 94.8 kPa (20 to 28 inches of mercury), and most preferably from 81.3 to 88.0 kPa (24 to 26 inches of mercury). Preferably, the pressure is reduced for at least ten minutes during the second half of the time the reaction proceeds. More preferably, the pressure is reduced for at least ten minutes, and preferably from ten minutes to 30 minutes, during the last hour of the reaction.

The use of a subatmospheric pressure for at least a portion of the time causes the volatiles to be pulled off. It is not necessary to have a protective nitrogen atmosphere over the reaction mass when a subatmospheric pressure is used during the entire process. The subatmospheric pressure provides an oxygen-free reaction vessel chamber so that the oxidation is prevented. The reaction is preferably conducted under an inert gas such as nitrogen. The reaction can proceed for as long as necessary for it to be complete. However, to ensure a uniform product free from volatiles, it is preferred that the reaction proceed for at least one-half hour. Preferably, the reaction proceeds for one to five hours, and more preferably for two to four hours. It is important to maintain the reacting mass in the vessel so that all volatiles generated during the reaction can be removed. The volatiles volatilize due to the temperature in the reacting vessel.

For the purposes of the present invention, the reaction is considered to include both the neutralization reaction and the release of the volatiles while the mass is in the reaction vessel. The reaction time is the time the mass is in the reactor. Preferably, the reaction proceeds under the blanket of an inert gas, preferably nitrogen, within the reaction vessel.

The neutralization of low molecular weight copolymer acids at atmospheric or super-atmospheric pressures results in the volatiles being trapped in the reacting mass. The trapped volatiles result in bubbles in the mixture and make characterization of the reaction product impossible. The reaction product forms a non-uniform uncontrolled copolymer salt. Copolymer salts produced in the presence of oxygen and at least atmospheric pressure were yellow in appearance and contained many gels.

The above-noted factors are particularly important in the method of the present invention where the molecular weight of the copolymer acid is so low that the only feasible way of neutralization to form a copolymer salt is in a reaction vessel. The molecular weights of the copolymer acids are so low that the viscosity is too low for processing in the manner described in the referenced prior art patents, i.e. in extruders and on mills. Therefore, the present invention provides a method to easily neutralize low molecular weight copolymer acids to form corresponding copolymer salts which are color stable, uniform in appearance and have reaction volatiles removed.

The alpha,beta-ethylenically unsaturated carboxylic acids copolymerized with ethylene preferably have 3 to 8 carbon atoms. Examples of such acids are given above. The concentration of the ethylene in the copolymer is at least 50 mol percent, preferably above 75 mol percent, and more preferably 80 to 95 mol percent.

A preferred alpha,beta-ethylenically unsaturated monocarboxylic acid is acrylic acid. The ethylene acrylic acid copolymer suitably has an acid number from 1 to 180, preferably from 40 to 160, and more preferably from 40 to 120. The acid number is determined by the number of milligrams of potassium hydroxide to neutralize one gram of copolymer acid. The number average molecular weight of the copolymer acid is from 500 to 6000, preferably from 1,000 to 6,000, and more preferably from 1,000 to 3,500.

Cations having valences of 1 to 3 are used to neutralize the copolymer acid. Preferably, the metallic cations are derived from metals from Groups IA, IIA, IIB, IIIA and the transition elements of the Periodic Table of Elements. Metal cations which are preferred are sodium, potassium, magnesium, calcium, barium, zinc and aluminum cations, with calcium cations being most preferred. Cation containing materials can be metal compounds including: oxides, hydroxides, acetates, methoxides, nitrates, carbonates and bicarbonates. The copolymer acid can be neutralized up to 100 percent; however, it is preferred to neutralize from 15 to 60 percent and more preferably from 25 to 50 percent of the carboxylic acid groups of the copolymer acid.

During the reaction, the temperature is kept above the melting point of the copolymer acid to ensure the removal of all volatiles and allow the continual mixing and handling of the reaction product of the copolymer salt. Of course, the temperature can be optimized or varied depending on the particular copolymer salt being produced. When a metallic cation having a valence greater than one is used with a given copolymer acid, ionic crosslinking more readily takes place and the viscosity of the reaction product increases as the neutralization level increases.

Copolymer acid salts produced by the method of the present invention are cream white in appearance and have few gel type impurities. The copolymer salts are uniform in appearance and have good color stability. The mixing was good and all volatiles were released and removed leaving a very smooth and well dispersed material.

Copolymer salts of a copolymer acid of ethylene and an alpha,beta-ethylenically unsaturated carboxylic acid having a number average molecular weight of 500 to 6000, the copolymer acid being neutralized with cations having a valence of 1 to 3, are useful as lubricants and dispersion aids for polymers. The copolymer acid has a number average molecular weight from 500 to 6000, preferably 1,000 to 6,000, more preferably 1000 to 3500. The copolymer acid is neutralized up to 100%, and preferably from 15% to 60%, with at least one cation of a metal from Groups IA, IIA, IIB, IIIA and the transition elements of the Periodic Table of Elements, with Group IIA and IIB metals preferred.

Preferably, the polymer lubricant is a salt of a copolymer acid of ethylene and an alpha,beta-ethylenically unsaturated carboxylic acid having 3 to 8, more preferably 3 to 6, carbon atoms examples of which are given above, preferably acrylic acid. The concentration of the ethylene in the copolymer is at least 50 mol percent, and preferably above 80 mol percent. The ethylene acrylic acid copolymer suitably has an acid number in the range from 1 to 180, preferably 40 to 160, and more preferably 40 to 120.

The dispersion aid preferably has a Brookfield viscosity at 140°C of from 10,000 to 250,000 and preferably 30,000 to 50,000 mPas (centipoises), and a hardness less than 12 dmm (decimillimeter), preferably less than 4 dmm, and most preferably less than 0.1 dmm as measured by the ASTM D-5 test. The dispersion aid of the present invention is useful in a method to process polymers.

The lubricant and dispersion aid of the present invention can be used to lubricate or to disperse finely divided inert material such as pigment in polymer compositions with a variety of polymers. Two particular polymers exemplifying the fact that the lubricant and dispersion aid of the present invention can be used with diverse polymers are polyolefins, such as polypropylene, and polymers of the styrene family, such as polystyrene.

Figures 1 and 2 are graphs of Torque v. Time for blends mixed in a Brabender Mixing Bowl.

Figure 3 is a graph of Fusion Time (sec) v. viscosity (mPas or centipoises (cps)) for blends of high impact polystyrene containing varying amounts of copolymer salt lubricants of the present invention.

Cations having valences of 1 to 3 are used to neutralize the copolymer acid as described in connection with the method of the invention.

Although various alpha,beta-ethylenically unsaturated carboxylic acid copolymer acids can be used, it is preferred to use ethylene/acrylic acid copolymers. Table I below illustrates three preferred ethylene/acrylic acid copolymers which can be used in the present invention.

TABLE I

| Copolymer acid | Softening pt. (ASTM E-18) °C | °F | Hardness dmm (ASTM D-5) | Density g/cc (ASTM D-1505) | Brookfield viscosity @ 140°C cps (mPas) | Acid No. mg KOH/g | Mol % acrylic acid |
|---|---|---|---|---|---|---|---|
| A | 108 | 226 | 2.0 | 0.93 | 500 | 40 | 5 |
| B | 102 | 215 | 4.0 | 6.93 | 650 | 80 | 8 |
| C | 92 | 198 | 11.5 | 0.93 | 650 | 120 | 15 |

The low molecular copolymer acids used to make the copolymer salts of the present invention can be prepared by any suitable process known in the art. An example method is described in U.S. Patent No. 3,658,741, with the following portion of particular importance:

"The ethylene desirably constitutes at least 65% by weight of the monomer feed and the comonomer from 1.0% to 35% of the feed, preferably 2 to 20% by weight of the feed. Under the specific conditions of our vapor phase polymerization the ratios by weight of the monomers in the feed and in the product are desirably substantially constant and variance in ratio between feed and product at most only minor such that products obtained by the invention contain a major portion of ethylene and generally 0.8% to 35% by weight of the comonomer, preferably 2.0% to 20% by weight of the comonomer with optimum portions depending largely on the particularly comonomer and intended use of the copolymer product. Generally, having less than a major portion of ethylene in the feed increasingly tends to produce products of undesirable softness. Having less than about 1% ethylene in the monomer tends to make it increasingly difficult to insure production of homogeneous polymers although one advantage of the invention is that homogeneous polymers may be produced with 1% or even somewhat less ethylene in the feed. It will be evident that advantageous feature of our process is the ability to maintain ratios of comonomer in the product to comonomer in the feed within the range of 0.7:1 to 1.8:1 which represent ratios substantially different than those commonly encountered in previously proposed processes with comonomers such as acrylic acid. The copolymers produced by the invention are of low molecular weight ranging generally between 500 to 5,000 number average molecular weight, preferably between 1,000 to 3,000 number average molecular weight, as measured by a vapor pressure osmometer. The copolymers also desirably have viscosity not exceeding 1500 mPa · s at 140°C, preferably between 100 to 1200 mPa · s at 140°C. A variety of new and useful copolymers are provided by the present invention. Of special interest are the homogeneous copolymers of ethylene and acrylic or methacrylic acid containing 1% to 20% by weight acrylic acid or methacrylic acid in the copolymer, preferably 3.5% to 12%, and further characterized by a number average molecular weight between 500 to 5000, preferably 1500 to 4000, acid number between 10 to 200, preferably 20 to 130, and hardness (0.1 mm penetration) between 0.5 to 30, preferably 1 to 10 when tested at room temperature (77°F) (25°C) with an ASTM needle with a load of 100 grams for 5 seconds".

The most preferred lubricant is copolymer acid A of Table I neutralized to between 15 and 60 percent with a calcium cation. A preferred cation containing material is calcium hydroxide. This copolymer salt has a high enough viscosity in various polymer melts to internally lubricate. However, the viscosity is low enough to provide a desirable amount of external lubrication. Additionally, because of the lower acid number of copolymer acid A, the viscosity of the copolymer salt is not as sensitive to the amount of calcium hydroxide during neutralization, thereby making control of the process easier. Finally, a lower viscosity salt of copolymer acid A is easier to produce and handle. As will be apparent from the discussion to follow, the copolymer salts of other copolymer acids, such as copolymer acids B and C, can be used if a more internal acting lubricant is desirable and/or if there is a need to add greater concentrations of the lubricant.

The lubricant of the present invention can be used with a wide variety of diverse polymers. The polymers can be polyolefins, such as polypropylene, or styrene based polymers, such as polystyrene. The lubricants of the present invention can also be used with polymers which include polyamides, polyesters, polyvinyl chloride, ABS (copolymers of acrylonitrile, butadiene and styrene), polyethylene, polypropylene, other polyolefins and polycarbonates, polyethylene terephthalate, polybutylene terephthalate, and phenolic resins. Polymer compositions can include up to 10 parts, preferably up to 5 parts and most preferably from 1.0 to 3.5 parts, of the lubricant per hundred parts of the polymer of the present invention.

The polymer salt lubricants of the present invention can be made by any means to make low molecular weight copolymer acid ionic salts known in the art. It is preferred to prepare the polymer salts of the present invention by the method described above.

The lubricants of the present invention behave both internally and externally. They exhibit excellent thermal stability and can be used in a wide variety of diverse polymers as noted above. The internal lubrication of diverse polymers, such as olefins and styrenic polymers, is related to the compatibility of the lubricant and the polymer to be lubricated. Physical properties to consider in choosing a lubricant are its viscosity and hardness which are related to molecular weight. Chemical compatibility is also important. The chemical compatibility is based upon chemical structure and interaction of constituents, such as the degree of solubility between the melted lubricant and polymer melt. The more compatible the lubricant and the polymer to be lubricated are, the more internally the lubricant behaves.

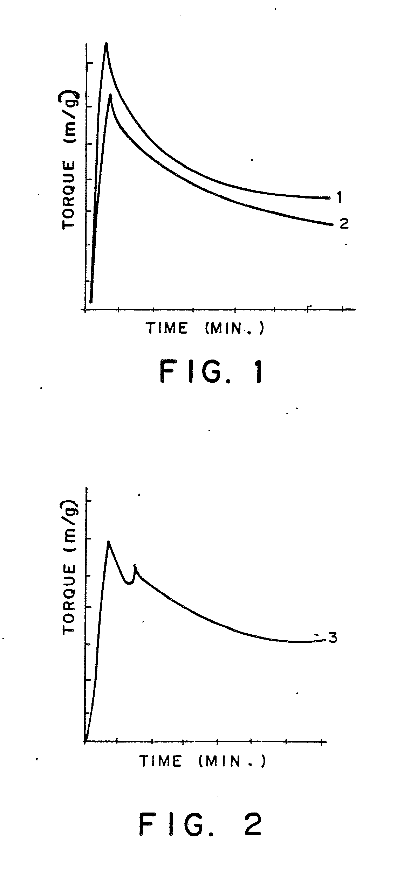

In addition to compatibility, the melting point of the lubricant, particularly an internally acting lubricant, is also an important consideration. When the melting point of the lubricant and polymer to be lubricated are comparable, the melted lubricant can behave internally in the polymer melt, reducing torque while maintaining or decreasing the processing time. Figure 1 shows a schematic curve of torque versus processing time. These curves are typical for a Brabender Mixing Bowl. Curve 1 is for a polymer containing no lubricant. The torque increases to a peak which occurs upon the melting of the polymer. Curve 2 is for the same polymer containing a lubricant which behaves internally and has a comparable melting point. The amount of torque necessary to process a given amount of polymer in a given time is decreased by the use of the internal lubricant.

If the melting point of the lubricant is too far below that of the polymer to be lubricated, it melts before the polymer has even softened. This causes the lubricant to over-lubricate the polymer. In an extruder, such over-lubrication occurs in the feed and transition zone of the extruder. This is illustrated by Figure 2 which schematically shows a curve of torque versus processing time. The time between the two peaks of the curve is the time during which the lubricant is melted and over-lubricating the unmelted polymer. The second peak along the time axis is when the polymer melts and the over-lubrication condition ceases. Similarly, if the melting point of the lubricant is too high, the polymer melts first and over-lubricates the lubricant resulting in a drop in torque until both are melted. The over-lubrication period between the peaks of curve 3 of Figure 2 is called the fusion time. This is the time necessary for melting of both the polymer and lubricant to take place. During this time, the system is over-lubricated. Although the torque decreases, no processing is taking place and valuable machine time is lost. At this time, the polymer blend is exposed to the high temperature in the processing equipment.

6

It is desirable to select a lubricant for a polymer which results in a minimum of fusion time. The fusion time can be considered an indication of the degree of internal lubrication of a given copolymer salt lubricant, and the amount of that lubricant which can be used before unacceptable external lubrication occurs.

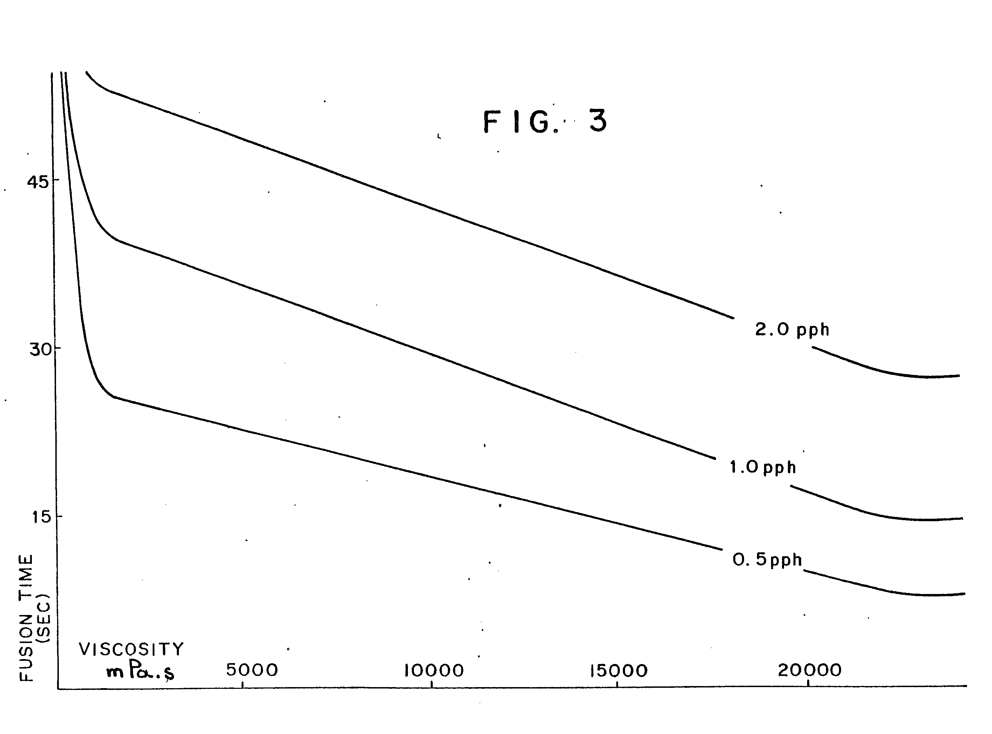

It has been found that the viscosity of the copolymer salt lubricant is an important indication of its behavior as a lubricant. Varying lubricant viscosity can compensate for differences in polymer and lubricant melting points. Figure 3 represents plots of fusion time, measured on a Brabender Mixing Bowl at 60 rpm and 190°C for a 50 g charge, of a lubricated high impact polystyrene HIPS USS 610, manufactured by USS Chemicals Division of U.S. Steel Corporation, Pittsburgh, PA, versus the viscosity of a copolymer salt of ethylene acrylic acid copolymers neutralized with calcium hydroxide. The viscosities are Brookfield viscosities measured at 140°C. A fusion time of 45 seconds or more indicates that over-lubrication would occur in an extruder using this polymer. Referring to this graph, it is seen that satisfactory lubrication can occur using an ethylene acrylic acid calcium salt in a concentration range of about 0.5 parts per hundred (pph) in the polymer of the lubricant having a viscosity of about 800 mPa · s to about 3.5 pph lubricant having a viscosity of about 25,000 mPa · s. It has been found that higher viscosity lubricants up to about 50,000 mPa · s can be used as lubricants of the present invention, so that amounts greater than 3.5 pph can be used.

When the viscosity of the lubricant is below about 800 mPa · s, the polymer's tolerance level is very low. The lubricant does not behave internally, based on viscosity. Only a limited amount of lubricant could be used without over-lubrication occurring. The exception to this would be a lubricant that is chemically compatible to the polymer. A chemically compatible lubricant of this low viscosity performs an internal function depending upon the degree of compatibility. Therefore, below 800 mPa · s the viscosity and chemical compatibility are both factors in the function of a lubricant. If a lubricant's viscosity was in this range and no outstanding chemical compatibility existed between the polymer and lubricant, the lubricant will probably function externally.

The area between 800 and 8,000 mPa · s is an area where hardness, chemical structure, and viscosity are key factors which influence the performance. A very hard material is expected to behave internally even at the low end of the viscosity range.

Above 8,000 mPa · s, the viscosity is the main parameter affecting lubricant behavior. The high viscosity overshadows all other properties and takes predominance. A lubricant in this viscosity range functions internally at the levels indicated on the graph.

The lubricants of the present invention can be used in a wide variety of polymers. As noted, polystyrene is a difficult polymer to lubricate. Polystyrene is presently lubricated with externally acting lubricants, such as zinc stearate. The amount of zinc stearate is limited to about 0.5 parts per hundred polystyrene before over-lubrication occurs. The lubricants of the present invention have a lower fusion time than zinc stearate when used in polystyrene at the 1.0 parts per hundred polystyrene level.

The above lubricants are useful in methods of processing polymers in various forming operations, such as molding and extrusion, or in mixing operations including mill mixing, extruder mixing and internal mixing, such as in a Banbury mixer.

The polymer to be processed and the lubricant of the present invention are preferably preblended. The preblending can be a mere physical mixing of polymer pellets and lubricant in powder or pellet form. This blend is fed to a processing means, which can include molding equipment, an extruder, mills, a mixing extruder or an internal mixer. Alternatively, and depending on the processing means, the polymer and lubricant can be fed separately to the processing means.

The polymer is processed with the aid of the lubricant. The lubricant of the present invention can be used to process polymers at temperatures from above the polymer melt temperature to about 400°C. The formed or mixed polymer product is then collected.

The dispersion aid of the present invention has a Brookfield viscosity at 140°C of from 10,000 to 250,000 mPa · s, and preferably from 30,000 to 50,000 mPa · s; and a hardness of less than 12 dmm preferably less than 4 dmm, and most preferably less than 0.1 dmm as measured on the ASTM D-5 test.

The most preferred dispersion aid is copolymer acid B of Table I neutralized to between 15 and 60 percent, and preferably 40 to 50 percent, with a calcium cation. A preferred cation containing material is calcium hydroxide. This copolymer salt is compatible with the polymer being processed and has a low enough viscosity for maximum pigment wetting. The viscosity and softening point of the copolymer salt of copolymer acid B are low enough to develop maximum dispersion of the pigment through the polymer without overlubrication of the polymer.

The dispersion aid of the present invention is useful in dispersing finely divided inert materials in polymers. For the purpose of the present invention an inert material is one that does not melt at the melting temperature of the polymer. Generally, the average diameter of material to be dispersed is less than 100 micrometers in diameter, and usually the diameter is less than 50 micrometers.

Classes of materials which can be dispersed with the dispersion aid of the present invention include: inorganic, organic, natural and synthetic pigments; lake dyes; less soluble dyes; fillers; flame retarders, antioxidants and stabilizers.

Typical pigments include: titanium dioxide, zinc oxide; calcium carbonate; barite, silica and china clay; lead white; carbon black; red lead; chromate pigments; Venetian Red; Prussian blue; chromic oxide;

chrome green; copper blue, and cobalt blue. Typical lake dyes include: alumina dyed with a solution of natural organic color; and coal tar colors precipitated from solution of various coal tar dyes by means of a metallic salt, tannin or other suitable reagent.

Typically, fillers may be selected from a wide variety of minerals, metals, metal oxides, siliceous materials, metal salts, and materials thereof. Examples of fillers include glass fibers, alumina, feldspar, asbestos, talc, calcium carbonates, clay, carbon black, quartz, novaculite and other forms of silica, kaolinite, bentonite, garnet, mica, saponite and beidellite. The foregoing recited fillers are illustrative only and are not meant to limit the scope of the fillers that can be utilized in this invention.

There can be from 0.1 to 100 parts of the material to be dispersed. Preferably there is 0.1 to 50 parts of the material per hundred parts of polymer. Lower concentrations of from 0.1 to 1 parts per hundred parts of polymer are useful for direct blending of low concentration materials such as colorants. Higher concentrations of from greater than 10 parts of material can be directly introduced into the polymer. High concentrations of from 10 to 50 parts of material per hundred parts of polymer are useful to make masterbatches such as color concentrates for introduction into larger quantities of the same or different polymers.

The dispersion aids of the present invention can be used with a wide variety of diverse polymers. The polymers can be polyolefins, such as polypropylene, or styrene based polymers, such as polystyrene. The dispersion aids of the present invention can also be used with the polymers which include but are not limited to polyamides, polyesters, ABS (copolymers of acrylonitrile, butadiene and styrene), polyethylene, polypropylene, other polyolefins and polycarbonates, polyethylene terephthalate, polybutylene terephthalate, and phenolic resins. Polymer compositions can include up to 10 parts, preferably up to 5 parts and most preferably from 1.0 to 3.5 parts, of the dispersion aids per hundred parts of the polymer of the present invention.

The polymer salt dispersion aid of the present invention can be made by any means to make low molecular weight copolymer acid ionic salts known in the art. It is preferred to prepare the polymer salts of the present invention by the method described above.

The dispersion aids of the present invention exhibit excellent thermal stability and can be used in a wide variety of diverse polymers as noted above. The dispersion aids of the present invention do not volatilize or discolor during processing. Compatibility, by definition, is the ability of two or more constituents to mix and remain homogeneously dispersed in one another. Physical compatibility depends on process conditions and physical properties of the dispersion aid and the polymer. The compatibility of the dispersion aid and the polymer is related to the physical properties of the dispersion aid such as viscosity and hardness of the copolymer salt which are related to molecular weight. Chemical compatibility is also important. The chemical compatibility is based upon chemical structure and interaction of constituents, such as the degree of solubility between the melted copolymer salt and polymer melt. A more compatible dispersion aid and polymer result in a more uniform dispersion.

One measure of compatibility of the dispersion aid and the polymer is the fusion time. Figures 1 and 2 illustrate schematic curves of torque versus processing time typically encountered for a Brabender Mixing Bowl in the same manner described above with regard to the lubricant.

In addition to compatibility the melting point of the dispersion aid, is also an important consideration. For maximum dispersion, the melting point of the dispersion aid should be as low as possible without overlubricating. The dispersion aid generally melts prior to the polymer in which finely divided material is to be dispersed. The dispersion aid wets the material and pulls the material along with it as it flows through the resin.

The present invention includes a method of processing polymers to assure maximum dispersion of finally divided inert material. The polymer, dispersion aid and material to be dispersed are first intimately mixed. The dispersion aid and polymer can be in powder, pellet or chip form and the material to be dispersed is preferably in powder form. The mixture is then fed to a means to melt blend it at a temperature above the melting point of the polymer and the dispersion aid. Alternately, the dispersion aid and the material to be dispersed can be intimately mixed. The mixture of the dispersion aid and the material to be dispersed can then be mixed with the polymer and the final mixture belt blended. The melt blended dispersion aid and material to be dispersed can then be formed into pellets or other suitable shapes and intimately mixed or melt blended with the polymer. The melt blending means can include molding equipment, an extruder, mills, a mixing extruder or an internal mixer.

The dispersion aid of the present invention can be processed with polymers at temperatures from above the polymer melt temperature to about 400°C. The formed or mixed polymer product is then collected.

Several examples are set forth below to illustrate the nature of the invention and the manner of carrying it out.

Examples 1—16

The copolymer salts used in Examples 1—16 of the present invention were made in an open laboratory flask heated from 154.4°C (310°F) to 160°C (320°F). One hundred and fifty grams of each copolymer acid of Table I to be neutralized was melted in the flask. A cation containing material was added to the molten copolymer. The material was continually stirred. the reactions were carried out for 15 minutes unless

**0 054 761**

otherwise indicated. The tensile testing was conducted on an Instron according to ASTM D-1708 (20 mil (0.5 mm)), micro tensile). The crosshead speed was two inches (5 cm) per minute. The percent neutralization is the theoretical amount, based on the amount of cation containing material, for 150 grams of copolymer acid. Unneutralized copolymer acids were used as Comparatives. The results are summarized in Table II.

TABLE II

| Ex. | Copolymer acid | Cation mat'l | % Neut | Brookfield viscosity @ 140°C mPa · s | Tensile psi (kPa) | | % Elong |
|---|---|---|---|---|---|---|---|
| Comp. 1 | A | — | 0 | 500 | 1300 | (8960) | 13.0 |
| 1 | A | 1 g Ca(OH)$_2$ | 25 | 1,760 | 1450 | (9990) | 11.9 |
| 2 | A | 1.98 g Ca(OH)$_2$ | 50 | 5,400 | 1950 | (13400) | 9.1 |
| 3 | A | 1.86 g Ca(OH)$_2$ | 50 | 6,100 | | | |
| 4 | A | .75 g CaO | 25 | 1,100[2] | | | |
| 5 | A | .53 g MgO | 25 | 2,098[1] | | | |
| 6 | A | 1.02 g MgO | 50 | 6,870 | | | |

[1]Kinematic Viscosity @ 140°C.
[2](2 hours, cloudy product).

TABLE II (contd.)

| Ex. | Copolymer acid | Cation mat'l | % Neut | Brookfield viscosity @ 140°C mPa · s | Tensile psi (kPa) | | % Elong |
|---|---|---|---|---|---|---|---|
| Comp. 2 | B | — | 0 | 650 | 850 | (5860) | 16.0 |
| 7 | B | .95 g Ca(OH)$_2$ | 12.5 | 1,630 | | | |
| 8 | B | 1.9 g Ca(OH)$_2$ | 25 | 4,970 | 1400 | (9650) | 10.2 |
| 9 | B | 3.72 g Ca(OH)$_2$ | 50 | > | 1600 | (11000) | 11.4 |
| 10 | B | 7.5 g Ca(OH)$_2$ | 100 | > | | | |
| 11 | B | .55 g MgO | 12.5 | 1,863[1] | | | |
| 12 | B | 1.01 g MgO | 25 | > | | | |
| 13 | B | 2.02 g MgO | 50 | > | | | |
| 14 | B | .71 g CaO | 12.5 | > | | | |
| 15 | B | 1.41 g CaO | 25 | 4,360 | | | |
| Comp. 3 | C | — | 0 | 650 | | | |
| 16 | C | 2.4 g CaO | 12.5 | > | | | |

[1]Kinematic Viscosity @ 140°C.

The above examples illustrate that ethylene acrylic acid copolymers having a range of acid numbers can be neutralized up to 100 percent with metal cations. The resulting copolymer salts have relatively low viscosities measured at 140°C. These viscosities indicate that these salts are free flowing at 140°C, a relatively low temperature. These salts are, therefore, not suitable for melt fabricating processes such as extrusion and milling.

Viscosities were not measured in Examples 9, 10, 12, 13 and 14, but it was observed that the viscosities increased. The increase in viscosity is believed to be related to ionic crosslinks which remain at 140°C. As the number of carboxyl groups in the copolymer acid increases and the percent neutralization increases, the viscosity at 140°C increases. It is believed that as the temperature increases the ionic crosslinks continue to break and the properties, particularly viscosity, will approach those of the copolymer acid.

In the solid state, the ionic crosslinks are evidenced by a more brittle material as indicated by decreasing elongation in Examples 1, 2, 8 and 9 compared to Comparatives 1 and 2. The tensile strength also increases as shown by the same Examples. It has been observed that the copolymer salts of the present invention are readily grindable into a powderlike consistency in a laboratory blender at room temperature. The copolymer acids from which the copolymer salts are derived cannot be ground. The copolymer salts are also more transparent than the copolymer acids from which they were derived.

Example 4 reacted more slowly than the other Examples. After two hours, the reacting mass was cloudy although the viscosity increased. Example 16 quickly resulted in a material having a viscosity too great to be stirred with the laboratory stirrer. The product was glassy with some transparency.

Examples 17—22

Examples 17—22 were conducted to neutralize the ethylene-acrylic acid copolymers referred to in Table I with calcium hydroxide. Sufficient calcium hydroxide was used to neutralize about 25 percent and about 50 percent of the carboxylic groups of the salts on the acrylic acid copolymers. Table III below shows the percent by weight of calcium hydroxide required to attain this neutralization.

The reaction was conducted in the laboratory using a glass reaction vessel. The reaction vessel was held within a heating mantle, connected to a variac, electric heat source. A laboratory vacuum line at about 3.9 kPa (30 mm Hg) was connected to the glass reaction vessel and the entire reaction took place under a vacuum. The negative pressure pulled off volatiles and also hindered any discoloration due to oxidation. A glass stirrer kept the copolymer salt that formed and the copolymer agitated during the reaction and aided dispersion. This eliminated an over abundance of gels due to poor dispersion in the reaction mass.

The temperature was controlled to about 250°C. The reaction was allowed to continue at this temperature until completion or until no more volatiles came from the reacting mass within the reaction vessel. Generally, the reaction took on the order of about 3 hours. However, the time varied with the percentage of neutralization and the reaction temperature.

Depending on the circumstances the time and temperature can be varied with reaction products, percent neutralization, and equipment.

TABLE III

| Test material | Copolymer acid | Acid No. | Wt. % Ca(OH)$_2$ | % Neutra-lized | Brookfield viscosity @ 140°C mPa·s | Hardness shore A2/ shore D |
|---|---|---|---|---|---|---|
| Control A | A | 40 | 0 | — | 627 | 75.2/29.0 |
| Example 17 | A | 40 | 0.67 | 25 | 1,610 | 95.0/44.0 |
| Example 18 | A | 40 | 1.33 | 50 | 5,500 | >100.0/49.6 |
| Control B | B | 75 | 0 | — | 660 | 81.0/21.0 |
| Example 19 | B | 75 | 1.25 | 25 | 3,875 | 84.0/34.0 |
| Example 20 | B | 75 | 2.50 | 50 | 24,625 | 95.0/39.0 |
| Control C | C | 120 | 0 | — | 695 | 62.0/11.1 |
| Example 21 | C | 120 | 2.0 | 25 | 9,550 | 71.0/19.5 |
| Example 22 | C | 120 | 4.0 | 50 | 34,125 | 89.0/29.5 |

A review of Tables I and III shows that as the acid number of the sample increases so does the amount of calcium hydroxide required for the same percentage of neutralization. A copolymer having twice as many carboxylic groups requires approximately twice as much calcium hydroxide, to achieve the same level of neutralization. Calcium hydroxide results in a metallic cation having a valence of two. This provides two sites for neutralization and the formation of ionic crosslinks. Therefore, as the concentration of the salt increases for a given amount of acid at the same neutralization, more ionic crosslinking is expected and the viscosity is expected to increase. This is exactly what was observed. There is a substantial increase in viscosity in going from 0 to 25% neutralization and a greater increase in viscosity in going from 25 to 50% neutralization. In fact, in going from 25% to 50% neutralization of copolymer acid C, the mixing became more difficult, greater number of gels appeared and dispersion was poorer. The salts of copolymer acid C had good appearance and handled well only at the lower 25% neutralization. In particular, the increased viscosity for copolymer acid C at 50% neutralization was not manageable in the experimental laboratory reaction apparatus. The glass stirrer could not handle the fast viscosity build up. Table III compares the viscosity build up of the various samples and the change in viscosity in going from 0 to 50% neutralization.

It has been found that the material of Example 20, 50% neutralized copolymer acid B, had viscosity ranging from 35,000 to 45,000 mPa · s when using the process of the referenced application. Briefly, the reaction was conducted in a three liter reaction vessel with continual stirring. The vessel was charged with 1,350 grams of copolymer acid B and 2.38% based on the weight of the copolymer of Ca(OH)₂. The Ca(OH)₂ was present in an amount sufficient to neutralize 48% of the copolymer acid carboxylic acid groups. The reaction proceeded for three hours. During the first two hours the temperature was raised to 200°C, at approximately a constant rate. The temperature was held at 200°C for one additional hour.

Examples 23—27

Examples 23—27 used the same method and laboratory conditions as Examples 17—22. As shown in Examples 17—22, the viscosity increases with the percent neutralization when using a divalent cation. This limited the flexibility of the experiment in the laboratory. In Examples 23—27, copolymer acid A was studied in more detail with regard to viscosity as a function of neutralization. Table IV below shows the change in viscosity at 10% intervals of neutralization from 0 to 50% neutralized copolymer acid A of Table I.

TABLE IV

| Example | Copolymer acid | % Neut (Ca(OH)₂) | Viscosity Brookfield @ 140°C mPa · s |
|---|---|---|---|
| Control D | A | 0 | 417 |
| 23 | A· | 10 | 585 |
| 24 | A | 20 | 875 |
| 25 | A | 30 | 1,350 |
| 26 | A | 40 | 1,875 |
| 27 | A | 50 | 5,550 |

Examples 28—31

Examples 28—31 were conducted in the laboratory under the same conditions as Examples 17—22. The salts evaluated are calcium hydroxide, calcium acetate, magnesium oxide and zinc acetate. In these examples, it was the goal to neutralize the copolymer acid B to 50% with each of the above listed salts. The results are shown in Table V below:

TABLE V

| Example | Copolymer acid | Cation material | Viscosity Brookfield @ 140°C mPa · s |
|---|---|---|---|
| 28 | B | Ca(OH)₂ | 24,625 |
| 29 | B | Ca(C₂H₃O₂)₂ | 45,750 |
| 30 | B | MgO | 24,825 |
| 31 | B | Zn(C₂H₃O₂)₂ | 47,250 |

It was observed that the zinc acetate had a yellow discoloration due to the high temperature it was exposed to during production.

In addition to the above examples, viscosity increases were observed when copolymer acid B was mixed with sodium hydroxide and aluminum hydroxide.

Examples 32—34

Examples 32—34 were conducted to neutralize copolymer acid B referred to in Table I. Examples 32—34 are three runs using the following process: The reaction was conducted in a three liter reaction

11

vessel with continual stirring. In each example the reaction vessel was charged with 1,350 grams of copolymer acid B and 2.38% based on the weight of the copolymer of $Ca(OH)_2$. The $Ca(OH)_2$ is present in an amount sufficient to neutralize 48% of the copolymer acid carboxylic acid groups. The reaction proceeded for three hours. During the first two hours the temperature was raised to 200°C, at approximately a constant rate. The temperature was held at 200°C for one additional hour.

The reaction was conducted under a nitrogen atmosphere at 0.1 MPa (one atmosphere) pressure. At the end of two hours, while the temperature was held at 200°C, a vacuum pressure of about 84.66 kPa (25 inches of mercury) was applied for 15 minutes. Nitrogen at one atmosphere pressure was admitted to the vessel for the remaining 45 minutes. The nitrogen was used to help sweep the volatiles away.

Table VI below summarizes the viscosity and hardness of the copolymer salt obtained in Examples 16—18.

TABLE VI

| Example | Brookfield viscosity @ 140°C mPa · s | Penetration hardness dmm (ASTM D-5) |
|---|---|---|
| 32 | 37,700 | .9 |
| 33 | 37,600 | .8 |
| 34 | 37,300 | .9 |

It is noted that the viscosity is higher in Examples 32—34 than Example 20 and 28. It is believed that the higher viscosity results from the conditions used in the process of Examples 32—34, and more heavy duty equipment, particularly for stirring the mass.

Example 35

Repeat Example 34 where the copolymer acid is an ethylene methacrylic acid copolymer.

Example 36

Repeat Example 34 where the copolymer acid is an ethylene ethacrylic acid copolymer.

Comparative study

A study was run in which copolymer acid C was reacted with about 4% $Ca(OH)_2$ in a Brabender sigma mixing bowl at 202°C and 40 rpm for 20 minutes. The 4% $Ca(OH)_2$ theoretically should react to neutralize 50% of the carboxylic acid groups of copolymer acid C. The reaction was conducted at atmospheric pressure, exposed to air. No dispersed particles or gels due to poor dispersion were observed. Volatiles were trapped and the product yellowed from oxidation.

Examples 37—38

Examples 37 and 38 below illustrate the use of low molecular weight ethylene acrylic acid copolymer salts formed upon reaction of ethylene acrylic acid copolymer with calcium hydroxide, as a lubricant for high impact polystyrene. Ethylene acrylic acid copolymer C of Table I was reacted with 4 weight percent calcium hydroxide in a single blade mixing bowl at 201.7°C (395°F) and 40 rpm for 20 minutes. Theoretically, 50 percent of the acid groups are neutralized in the 4 percent calcium hydroxide and copolymer C mixture.

The 4 percent calcium hydroxide copolymer C acid salt was blended into USS 610™ high impact polystyrene (manufactured by USS Chemicals Division, U.S. Steel Corporation, Pittsburgh, PA.) in a Henschel blender for 2 minutes. The blends were extruded through a 3.18 cm (1-1/4 inch) Brabender extruder. The temperature profile in the extruder was: Zone 1—180°C, Zone 2—190°C, Zone 3—200°C, Zone 4—200°C and Zone 5—200°C. The USS 610 high impact polystyrene was a Vicat Softening Point of 240°F (96°C) on ASTM D-1525.

Table VII summarizes the effect on output in grams per hour of the various lubricants. A control was run which had no lubricant. Lubricant was used in concentrations of 0.1, 0.5 and 1.0 parts per hundred (pph) of polystyrene. Comparatives 4 and 5 show the effect on the output of high impact polystyrene USS 610 using unneutralized ethylene acrylic acid copolymer B of Table I as a lubricant in polystyrene. Comparatives 6 and 7 illustrate the use of a polyethylene homopolymer as a lubricant in polystyrene USS 610. The polyethylene homopolymer is characterized by: a softening point of about 106°C (ASTM E-C8), a penetration hardness of about 4.0 dmm (ASTM D-5); and a Brookfield viscosity at 140°C of about 350 mPa · s. Examples 37 and 38 illustrate the use of 50 percent neutralized ethylene acrylic acid copolymer C with $Ca(OH)_2$ at a 4 percent level to lubricate high impact polystyrene USS 610.

TABLE VII

| | Extruder rpm | Output gm/hour | | | |
|---|---|---|---|---|---|
| | | Control 0 pph | .1 pph | .5 pph | 1.0 pph |
| Comparative 4 | 15 | 1518 | 1539 | 846 | * |
| Comparative 5 | 30 | 3186 | 3228 | 1071 | * |
| Comparative 6 | 15 | 1518 | 726 | * | * |
| Comparative 7 | 30 | 1386 | * | * | * |
| Example 37 | 15 | 1518 | 1617 | 1599 | 1584 |
| Example 38 | 30 | 1386 | 3270 | 3273 | 3333 |

*over-lubrication occurred

Over-lubrication is a condition which occurs when there is too much lubrication resulting in insufficient friction to cause the polymer to move through the extruder. This causes the output to decrease in comparison to when no lubricant is used. Referring to Table VII, the unneutralized ethylene acrylic acid copolymer, Comparatives 4 and 5, started to over-lubricate at .5 parts per hundred resin, and the homopolymer, Comparatives 6 and 7, started to over-lubricate at .1 parts per hundred polystyrene resin. This indicates that these lubricants are acting externally in forming a lubrication layer between the polystyrene and the metal surfaces of the extruder. Examples 37 and 38 resulted in no over-lubrication occurring through 1 part per hundred styrene resin; and in fact, the output increased with the addition of the lubricant indicating internal lubrication.

Examples 39 and 40

Comparatives 8 through 11 and Examples 39 and 40 illustrate that the lubricant of the present invention can be used in a variety of different polymers. In Examples 39 and 40, 50 percent neutralized acid copolymer C of Table I was evaluated in Pro-Fax™ resin 6501, polypropylene, a homopolymer having a melt index of 3.4, which is manufactured by Hercules Inc. of Wilmington, Del. The 50 percent neutralized copolymer acid C of Table I was prepared in the same manner as Examples 37 and 38. Comparatives 8 and 9 disclose results using an unneutralized ethylene acrylic acid copolymer B of Table I. Comparatives 10 and 11 disclose results using a polyethylene homopolymer having an ASTM E-28 softening point of 215°F (102°C), an ASTM D-5 hardness of 7.0 dmm, and a Brookfield viscosity at 140°C (284°F) of 180 mPa · s. The lubricants were blended with the polypropylene in a Henschel blender for 2 minutes at the concentrations of 0, .1, .5, 1.0, 2.0 and 2.5 parts per hundred of the polypropylene. These blends were then extruded on a 3.18 cm (1-1/4 inch) Brabender extruder. The temperature profile for the polypropylene resin was as follows: Zone 1—190°C; Zone 2—200°C, Zone 3—210°C, Zone 4—220°C and Zone 5—220°C. The output in grams per hour is summarized in Table VIII below:

TABLE VIII

| | Extruder rpm | Output gm/hour | | | | | |
|---|---|---|---|---|---|---|---|
| | | Control 0 pph | .1 pph | .5 pph | 1.0 pph | 2.0 pph | 2.5 pph |
| Comparative 8 | 10 | 1035 | 900 | 1014 | 939 | 495 | — |
| Comparative 9 | 30 | 2988 | 2979 | 3009 | 2910 | * | — |
| Comparative 10 | 10 | 972 | 894 | 984 | 969 | 990 | — |
| Comparative 11 | 30 | 2709 | 3087 | 3060 | 3102 | 3060 | — |
| Example 39 | 15 | 1452 | 1500 | 1488 | 1479 | — | 1392 |
| Example 40 | 30 | 2877 | 2700 | 2934 | 2838 | — | 2859 |

*over-lubrication occurred

13

A review of Table VIII shows that the lubricants of Comparatives 8 through 11, as well as the lubricant of the present invention, can be used with polypropylene. However, unneutralized copolymer B (Comparatives 8 and 9) over-lubricates at 2 parts per hundred. Examples 39 and 40 show that the lubricant of the present invention is a satisfactory lubricant for polypropylene without over-lubrication at 2.5 pph.

Polyethylene homopolymers, such as those used in Comparatives 6, 7, 10 and 11, are unsatisfactory lubricants for styrene-type polymers. Unneutralized copolymer acids, such as those in Comparatives 4, 5, 8 and 9, are poor lubricants for styrene-type polymers and limited as to their concentration in polypropylene. Examples 37 through 40 show that the lubricants of the present invention can be used in polyolefins, such as polypropylene, as well as styrene-type polymers, such as polystyrene, and obtain internal-type lubrication where larger amounts of lubricant can be incorporated without over-lubrication.

As discussed above, the behavior of a lubricant can be internal or external. A lubricant functions internally if it has compatible physical properties such as softening point, viscosity, hardness, and/or chemical compatibility which depends on the existence of solubility between the lubricant and the base polymer.

Examples 41—46

Table IX below illustrates comparatives and examples using various lubricants of Table III in high impact polystyrene (USS 610). The high impact polystyrene plus lubricants were evaluated in a 3.18 cm (1-1/4 inch) Brabender extruder. The temperature zones were set at 170°C, 180°C, 190°C, 200°C, and 200°C.

### TABLE IX

| | Lubr. mat'l | Lubr. Brookfield viscosity @ 140°C mPa · s | Extr. rpm | pph in polystyrene | Output gram/ 2 min |
|---|---|---|---|---|---|
| Comparative 12 | — | — | 15 | 0 | 47.9 |
| Comparative 13 | — | — | 30 | 0 | 106.9 |
| Example 41 | Ex. 18 | 5,500 | 15 | 1 | 34.7 |
| Example 42 | Ex. 18 | 5,500 | 30 | 1 | 106.7 |
| Example 43 | Ex. 20 | 24,625 | 15 | 1 | 45.5 |
| Example 44 | Ex. 20 | 24,625 | 30 | 1 | 106.7 |
| Example 45 | Ex. 22 | 34,125 | 15 | 1 | 51.4 |
| Example 46 | Ex. 22 | 34,125 | 30 | 1 | 107.9 |

Referring to Examples 41 through 46 and Comparatives 12 and 13, polystyrene without lubricant, in Table IX, the higher the viscosity of the acid salt lubrication material the more internal its performance was in high impact polystyrene. The output increased with the viscosity of the acid salt, the material of Example 22, at 1 part per hundred of polystyrene. The acid salt, the material of Example 20, had an equivalent output to the virgin resin. The salt material of Example 18 over-lubricated the system at 1 part per hundred of polystyrene. This is particularly evident at the extruder speed of 15 rpm. In other words, the acid salt of the material of Example 18 was more external lubricating than that of the material of Examples 20 and 22. This shows that as the viscosity increased, the tendency towards process compatibility or internal functionality increased.

Examples 47—58

Table X below shows a comparison (Comparative 14) of high impact polystyrene USS 610 without lubricant, compared with Comparatives 15, 16, and 17 using a zinc stearate lubricant. Additionally, Comparatives 18 and 19 were run using ethylene acrylic acid copolymer B from Table I, and Comparatives 20 and 21 were run using copolymer A from Table I. Examples 47 through 58 illustrate the present invention on a similar concentration basis to that as in Comparatives 15 through 17. The Comparatives and Examples were conducted in a Brabender Mixing Bowl. It has been found that blends having a fusion time of about 45 seconds or longer in the Brabender Mixing Bowl overlubricate when processed through an extruder. Fusion time limits for different equipment can be determined as desired.

As discussed above, it is desirable to lubricate the polystyrene polymer while minimizing fusion time. This is important to reduce the time the polymer is in the extruder and exposed to heat. At the same time, the frictional heat generation within the polymer is reduced.

14

Conventionally, zinc stearate is one of the most popular lubricants used commercially in the plastics area. It is usually used at .5 parts per hundred level or less in a system.

Zinc stearate lubricates in an external manner in polystyrene. The lubricant essentially functions at the surface of the resin during the extrusion process. Oppositely, an internal lubricant mixes internally with the resin and is dispersed throughout. This intimate mixture of the lubricant and resin is considered process compatibility. A certain degree of external functionality exists with internal lubricants, due to the mix of lubricant and resin near the barrel of the extruder.

Table X illustrates the fusion times for high impact polystyrene USS 610 using a variety of comparative materials and materials from Examples 17, 18, 19 and 20 of the present invention.

TABLE X

|  | Materials | pph Lubr. in USS 610 | Fusion time (sec.) |
|---|---|---|---|
| Comparative 14 | — | 0 | — |
| Comparative 15 | ZnSt | .1 | 12 |
| Comparative 16 | ZnSt | .5 | 30 |
| Comparative 17 | ZnSt | 1.0 | 189 |
| Comparative 18 | B | .5 | 93 |
| Comparative 19 | B | 1.0 | 154 |
| Example 47 | Ex. 19 | .5 | 15 |
| Example 48 | Ex. 19 | 1.0 | 36 |
| Example 49 | Ex. 19 | 2.0 | 48 |
| Example 50 | Ex. 20 | .5 | 6 |
| Example 51 | Ex. 20 | 1.0 | 105 |
| Example 52 | Ex. 20 | 2.0 | 24 |
| Comparative 20 | A | .5 | 72 |
| Comparative 21 | A | 1.0 | 165 |
| Example 53 | Ex. 17 | .5 | 27 |
| Example 54 | Ex. 17 | 1.0 | 39 |
| Example 55 | Ex. 17 | 2.0 | 43.5 |
| Example 56 | Ex. 18 | .5 | 24 |
| Example 57 | Ex. 18 | 1.0 | 42 |
| Example 58 | Ex. 18 | 2.0 | 57 |

Comparatives 15 through 19 show that zinc stearate behaves as a satisfactory lubricant up to .5 parts per hundred. At 1.0 part per hundred zinc stearate, over-lubrication occurs. This substantiates the fact that zinc stearate generally behaves as an external acting lubricant in high impact polystyrene.

Comparatives 18 and 19 using ethylene acrylic acid copolymer B of Table I over-lubricates the system and cannot be used effectively as a lubricant high impact polystyrene. Examples 47—49 show that the material of Example 19, ethylene acrylic acid copolymer B of Table I, neutralized to 25 percent with calcium hydroxide can be incorporated into the system up to 1 part per hundred. As shown in Example 49, at 2 parts per hundred of the material of Example 19 borders on over-lubrication. The material of Example 20, which is 50 percent neutralized ethylene acrylic acid copolymer B of Table I with calcium hydroxide, has a fusion time of 24 seconds at 2 parts per hundred level. This fusion time is less than that exhibited by 0.5 parts per

15

hundred level of zinc stearate, indicating a more internal acting lubricant than zinc stearate. This confirms the previous evidence that the ethylene acrylic acid copolymer salts behave in an internal fashion in styrenic polymers.

Also included in Table X are Comparatives 20 and 21 and Examples 53 through 58 of the present invention. These examples show the lubrication behavior in high impact polystyrene with the copolymer salt of Examples 17 and 18 made from acrylic acid copolymer A of Table I. Examples 53 through 55 show that up to 2.0 pph of lubricant of the material of Example 17 can be used before over-lubrication occurs; and Examples 56 and 57 show that up to 1.0 pph of lubricant of the material of Example 18 can be used before over-lubrication occurs. In all cases of Examples 47 through 58, more lubricant of the present invention can be used when zinc stearate without over-lubrication.

Further evidence that the copolymer acid B of Table I salts behaves more internally in high impact polystyrene is that as more material from Example 20 is added to polystyrene, the melt index of the blend increases. This indicates that the assumption that this acid salt functions as a flow modifier is correct.

Examples 59—61

In the polymer lubrication art it is highly desirable to find a lubricant that could be used in a variety of polymers. Of particular interest is a lubricant that could be used in olefins as well as styrenics. Therefore, the internal behaving material of Example 8 was evaluated in polypropylene. The Brabender Mixing Bowl was run at 60 rpm, 180°C with a 35 gram charge. The copolymer of ethylene acrylic acid has a chemical structure similar to olefins. It is expected, and there is a tendency for, a higher degree of chemical compatibility in the olefins than in the styrenics. Therefore, higher loading levels of the lubricant are possible. This is particularly shown in Table XI illustrating Examples 59—61 and Comparatives 22, 23 and 24.

TABLE XI

| | Material | pph Polypropylene | Fusion time (sec.) |
|---|---|---|---|
| Comparative 22 | — | 0 | 9 |
| Comparative 23 | B | .5 | 15 |
| Comparative 24 | B | 1.0 | 18 |
| Example 59 | Ex. 20 | .5 | — |
| Example 60 | Ex. 20 | 1.0 | 9 |
| Example 61 | Ex. 20 | 2.0 | 9 |

As illustrated in Table XI in Example 61, 2 parts of the material of Ex. 20 has an equivalent fusion time as the virgin resin with no lubricant. This is indicative of internal functioning. Comparatives 23 and 24 show that material B, unneutralized ethylene acrylic acid, does not over-lubricate the system. However, as shown in Comparatives 23 and 24, the fusion time increases upon the addition of material B as lubricant. This indicates that the lubricant material of Example 20 of the present invention behaves more internally than unneutralized ethylene acrylic acid copolymer. Therefore, the material of Example 20 performs as an internal lubricant in polypropylene, as well as high impact polystyrene.

Examples 62—69

Examples 62—69 further illustrate the compatibility of the salt of copolymer acid B described in Table I, with high impact polystyrene. The polystyrene used was USS 610™ high impact polystyrene, manufactured by USS Chemicals Division, U.S. Steel Corporation, Pittsburgh, Pa. The polystyrene has a Melt Index of 2.0 and a VICAT Softening Point of 240°F (116°C) on ASTM D-1525.

The fusion time indicates the compatibility of the copolymer salt and the polymer, and the extrusion output rate in grams per 2 minutes, is indication of overlubrication caused by incompatibility as measured by fusion time, leading to external lubrication. The fusion time was measured using a Brabender Mixing Bowl, using a Brabender No. 6 mixing head at 190°C, 60 rpm with a 50 gram charge. The blends were extruded through a 3.18 cm (1-1/4 inch) Brabender extruder at 30 rpm. The temperature profile in the extruder was: Zone 1—170°C; Zone 2—180°C; Zone 3—190°C; Zone 4—200°C; and Zone 5—200°C. Comparative 25 is polystyrene containing no additive. Comparatives 26 and 27 are polystyrene containing unneutralized copolymer acid B from Table I. Examples 62—64 contain copolymer acid B 25% neutralized with $Ca(OH)_2$, (25% N-B), and Examples 65—69 contain copolymer acid B 50% neutralized with $Ca(OH)_2$, (50% N-B). Examples 62—69 are summarized in Table XII with amounts of additive in pph (parts per hundred of polymer).

16

TABLE XII

| | pph Additive | Fusion time (sec.) | Extrusion output grams/2 min. |
|---|---|---|---|
| Comp. 25 | | | 107 |
| Comp. 26 | 0.5 B | 90 | 58 |
| Comp. 27 | 1.0 B | 154 | 20 |
| Ex. 62 | 0.5 25% N-B | 15 | . 112 |
| Ex. 63 | 1.0 25% N-B | 36 | 109 |
| Ex. 64 | 2.0 25% N-B | 48 | 96 |
| Ex. 65 | 0.5 50% N-B | 6 | 109 |
| Ex. 66 | 1.0 50% N-B | 10 | 112 |
| Ex. 67 | 2.0 50% N-B | 24 | 115 |
| Ex. 68 | 3.0 50% N-B | 38 | 109 |
| Ex. 69 | 4.0 50% N-B | 42 | 106 |

A review of Table XII indicates that as much as 4.0 pph 50% neutralized copolymer acid B can be added and the fusion time and output are maintained at satisfactory levels.

Examples 70—78

The following are Examples of the two dominant physical properties, hardness and viscosity, relating to compatibility of the dispersion aid with polystyrene (PS) of the type described in Examples 62—69 and polypropylene (PP). The polypropylene is Pro-Fax™ resin 6501, a homopolymer having a melt index of 4.0, which is manufactured by Hercules Inc. of Wilmington, Delaware. The dispersion aid of Comparatives 28, 30 and 31 is copolymer acid B. The dispersion aid in Examples 70 and 71 is copolymer acid B, 25% neutralized with Ca(OH)$_2$, (25% N-B). The dispersion aid in Examples 72—78 is copolymer acid B, 50% neutralized with Ca(OH)$_2$, (50% N-B). Comparative 29 is the fusion time polypropylene without the dispersion aid. Examples 70—78 are summarized in Table XIII with amounts of additive in pph (part per hundred polymer).

17

### TABLE XIII

| | Brookfield viscosity @ 140°C mPa·s | Shore A hardness | pph Additive in PS | pph Additive in PP | Fusion time sec |
|---|---|---|---|---|---|
| Comp. 28 | 660 | 81 | 1.0 B | — | 154 |
| Ex. 70 | 3,900 | 84 | 1.0 25% N-B | — | 36 |
| Ex. 71 | " | " | 2.0 25% N-B | — | 48 |
| Ex. 72 | 24,600 | 95 | 1.0 25% N-B | — | 6. |
| Ex. 73 | " | " | 2.0 50% N-B | — | 10 |
| Ex. 74 | " | " | 3.0 50% N-B | — | 24 |
| Ex. 75 | " | " | 4.0 50% N-B | — | 42 |
| Comp. 29 | — | — | — | — | 9 |
| Comp. 30 | 660 | 81 | — | 1.0 B | 18 |
| Comp. 31 | " | " | — | 2.0 B | 32 |
| Ex. 76 | 24,600 | 95 | — | 1.0 50% N-B | 9 |
| Ex. 77 | " | " | — | 2.0 50% N-B | 9 |
| Ex. 78 | " | " | — | 4.0 50% N-B | 14 |

A review of Table XIII shows that compatibility improves with higher viscosity and hardness.

Examples 79—80

The dispersion aid of the present invention was evaluated in dry powder form. The dispersion aid and pigment were blended, using a high intensity Henschel blender at 1800 revolutions per minute (rpm) resulting in a free flowing powder. The finished form is a dustless powder containing the dispersion aid and pigment. Each mixture of dispersion aid and pigment was blended with high impact polystyrene blends of the type described in Examples 62—69. The mixture of dispersion aid and pigment were composed of equal parts per hundred of polymer, of dispersion aid and of pigment. The dispersion aid was copolymer acid B of Table I neutralized 50% with Ca(OH)$_2$. The pigments used were phthalocyanine blue-GT produced by the American Cyanamid Co., hereinafter phthalo blue, and phthalo blue plus titanium dioxide.

Each polystyrene blend was pelletized using a Brabender 3.18 cm (1.25 inch) single screw extruder. The extruder contained a single stage screw having a 3 to 1 compression ratio. The finished compounds were then injection molded, using a 29.6 cm$^3$ (1.0 oz) Battenfeld injection molder, into color chips. The temperature zones in the injection molder were Zone 1—180°; Zone 2—190°C; Zone 3—200°C; and Zone 4—200°C. Each color chip was then evaluated for color intensity using an Applied Color Systems 500 Spectrophotometer. The Hunter 1958 method, L1, a1, b1 color space, was used. The procedure generally follows the theory in *Color and Color Related Properties*, Pubs. No. 010/2, October, 1978-A1 by Gardner Laboratory Division, P.O. Box 5728, 5521 Landy Ln., Bethesda, Maryland 20014. The color intensity was measured under daylight conditions. The color intensity values for the intensity of blue are indicated as -b. The greater the -b value indicates a more intense blue color. The results of increased color development in high impact polystyrene resin using copolymer acid B of Table I neutralized 50% with Ca(OH)$_2$ as a dispersion aid are summarized in Table XIV below. The amounts of dispersion aid are pph (parts per hundred of polymer).

TABLE XIV

|  | Comp. 32 | Ex. 79 | Comp. 33 | Ex. 80 | Comp. 34 | Ex. 81 |
|---|---|---|---|---|---|---|
| Polystyrene | 100 | 100 | 100 | 100 | 100 | 100 |
| Phthalo blue | .5 | .5 | 1.0 | 1.0 | .25 | .25 |
| $TiO_2$ |  |  |  |  | 1.0 | 1.0 |
| 50% N-B | — | .5 | — | 1.0 | — | 1.25 |
| Color intensity | −21.72 | −23.13 | −18.46 | −21.37 | −32.72 | −35.77 |

The extrusion processing of the high impact polystyrene compounds was not impaired. This was not true when attempting to evaluate concentrates containing copolymer acid B. Dry concentrates containing pigment and equal amounts of copolymer B developed excessive lubrication during the extrusion and pelletizing stage. Compounds containing 0.5 pph pigment and 0.5 pph copolymer acid B had a reduction of greater than 65% output rate. Table XIV indicates that the color intensity increased in each Example versus the corresponding Comparative.

Examples 82—83

High concentrations of powdered pigments in pelletized polystyrene of the type described in Examples 62—69 were evaluated. These compositions are useful as color concentrates for polystyrene compositions or in other polymers. The dispersion aid used was copolymer salt B neutralized 50% with $Ca(OH)_2$, and having an ASTM E-28 softening point of about 115°C.

The materials were charged into a Henschel high intensity blender at 1800 rpm. Heat was applied to the blend during blending. The temperature of the blends was increased to the softening point of the dispersion aid then discharged. The blends were then compounded into pellets, using a 3.18 cm (1.25 inch) Brabender extruder, containing a 4 to 1 compression ratio single stage screw. The temperature zones in the extruder were: Zone 1—180°C; Zone 2—180°C; Zone 3—200°C; Zone 4—200°C; and the die at 200°C. Table XV summarizes the processing characteristics of concentrates in terms of meter grams (M gms). Amounts are percents by weight.

TABLE XV

|  | Comp. 35 | Comp. 36 | Ex. 82 | Comp. 37 | Ex. 83 |
|---|---|---|---|---|---|
| Polystyrene | 70 | 69 | 67 | 75 | 71 |
| Phthalo blue | 30 | 30 | 30 | 25 | 25 |
| Copolymer | — | 1 | — | — | — |
| Acid B 50% N-B | — | — | 3 | — | 4 |
| Avg torgue (Mgm) | 7800 | 6600 | 7500 | 8200 | 8500 |

As can be seen in Table XV, the 30% pigment containing concentrate, with 1% copolymer acid B, has much greater effect on the processing (torque reduction) than a 3% addition of copolymer acid B 50% neutralized with $Ca(OH)_2$. The 4% copolymer acid B 50% neutralized with $Ca(OH)_2$ had no detrimental effect on processing. Visual observation of the pelletized concentrates showed the improvement of pigment dispersion developed by the use of the acrylic acid salts as a dispersion aid. Concentrates containing acrylic acid salts had a much more intense blue color compared to concentrates without. It could also be observed that fewer non-dispersed pigment particles were present in concentrates containing the acrylic acid salts.

Example 84

Following is an Example of a preferred embodiment of the dispersion aid of the present invention. Copolymer acid B of Table I, having a molecular weight of below 5000 MWn, is 50% neutralized with calcium hydroxide by the method in US—A—4381376. The dispersion aid has an average Brookfield viscosity of about 43,000 mPa · s at 140°C; an ASTM E-Z8 softening point of 105°C; and ASTM D-5 hardness (dmm) of about 0.7; an ASTM D-1505 density of 0.93 gm/cc; an acid number of 40 mg of potassium hydroxide necessary to neutralize one gram of the dispersion aid; and is white (clear).

Examples 85—88

This is an illustration of the dispersion aid of the present invention used in a composition to make polyamide fibers. The polyamide used was fiber grade polyepsiloncaprolactam (N6) having a formic acid

19

viscosity (FAV) of 56. The polyamide was blended to form a concentrate with the dispersion aid of Example 84 and a pigment. The pigments used were: American Hoechst HS600 green dye lake; Ciba-Geigy Corp., Ciba No. 2732 yellow; Red 2B red pigment; and phthalo blue made by the Harmann Chemical Co. The concentrate was made by blending polyepsiloncaprolactam with equal amounts of the dispersion aid and pigments in a Baker-Perkins blender at 125°C. The amounts in weight percent of the polyepsiloncaprolactam (N6), pigment and dispersion aid used are summarized in Table XVI.

TABLE XVI

| | Ex. 85 | Ex. 86 | Ex. 87 | Ex. 88 |
|---|---|---|---|---|
| N6 | 80 | 60 | 70 | 70 |
| Disper. aid | 10 | 20 | 15 | 15 |
| Pigment | 10 (green) | 20 (yellow) | 15 (red) | 15 (blue) |

The mixture was then extruded through a 6.35 cm (2-1/2 inch) single screw extruder at an average temperature of about 290°C. The concentrate was pelletized. The pellets of the concentrate of the polyepsiloncaprolactam, the dispersion aid and the pigment were bag blended with the polyepsiloncaprolactam (N6) to obtain the desired pigment level, and extruded through a 5.1 cm (2 inch) single screw extruder. The temperature profile throughout the extruder was Zone 1—294°C; Zone 2—275°C; Zone 3—275°C; and Zone 4—275°C. The extruder had a 14 hole spinneret. The draw ratio was 3.2 and the pump size was 1.16. The fibers were spun to about 1100 denier fiber. Fourteen fiber strands came out of the die and were wound onto a spool. Five spools were then wound together to give a finished fiber of 70 strands. A control fiber which contained no additives was spun as Control 1, and a control fiber containing .25 parts of dispersion aid per hundred of polymer (pph) was spun as Control 2.

The concentrate of Example 85 was blended with additional polyepsiloncaprolactam until there was 0.15 pph pigment (Ex. 85A), and 0.50 pph pigment (Ex. 85B). The concentrate of Examples 86, 87 and 88 was blended with additional polyepsiloncaprolactam until there was 0.2 pph pigment. The dispersion aid of the present invention resulted in excellent dispersion of the pigment in the spun fibers in all examples. There was no strand breakage due to poor dispersion. The dispersion aid added gloss to the surface of the fiber. It was observed that the dispersion aids used helped the polyepsiloncaprolactam process more efficiently. The fibers had no breakage problems, good release from the spinnerites. Additionally, the composition had better flow properties than the control as indicated by lower pressures required during extrusion. Table XVII below summarizes the physical property data of Comparatives 38 and 39 and Examples 24A, 24B, 25, 26 and 27. The stress-strain values were measured according to ASTM D-2256-80, using an Instron Machine at .5 cm/min. Break strength (grams), break elongation (%), tenacity (grams/denier), modulus (grams/denier) toughness (gram-cm/denier-cm) and load (grams) at 5% elongation (5E).

TABLE XVII

| | Denier | Brk. str. | Brk. elong. | Tenacity | Mod. | Toughness | Load @ 5E |
|---|---|---|---|---|---|---|---|
| Comp. 38 | 1136 | 4630 | 60 | 4.1 | 18.63 | 1.71 | 1096.23 |
| Comp. 39 | 1132 | 3834 | 64 | 3.4 | 16.87 | 1.56 | 999.15 |
| Ex. 85A | 1136 | 3910 | 65 | 3.4 | 16.08 | 1.60 | 969.37 |
| Example 85B | 1120 | 3788 | 63 | 3.4 | 16.07 | 1.54 | 928.55 |
| Ex. 86 | 1130 | 3999 | 67 | 3.5 | 17.02 | 1.73 | 1000.26 |
| Ex. 88 | 1122 | 3902 | 59 | 3.5 | 16.65 | 1.41 | 976.54 |

Generally, the use of the dispersion aid of the present invention causes a slight decrease in the physical properties. However, the dispersion of the pigments was so uniform that the addition of the pigment with the dispersion aid cause no further decrease in measured physical properties. Generally, poorly dispersed pigment reduces physical properties significantly.

Example 89

Thermal stability becomes important as the dispersion aid is used and compounded into high temperature processing plastics, such as nylon, polyester, polycarbonate, etc. An indication of thermal stability is the performance of the additive during thermal gravimetric analysis (TGA) in air. T.G.A.

**0 054 761**

evaluations, in air, were performed using a DuPont 951 Unit, at 10°C/min heating rate, using a 30 mg sample. Copolymer acid B of Table I was run against copolymer acid B neutralized 50% with $Ca(OH)_2$. Table XVIII summarizes the percent weight loss at the measured temperatures.

TABLE XVIII

% Weight loss at °C

|  | 275 | 300 | 325 | 350 | 375 | 400 |
|---|---|---|---|---|---|---|
| Comparative | 1.9 | 4.0 | 9.5 | 20.0 | 60.7 | 61.5 |
| Example 89 | 0.8 | 1.1 | 1.8 | 2.5 | 4.2 | 10.0 |

The copolymer salt had increased thermal stability as measured by percent weight loss, and additionally retained a water white color at high temperatures.

**Claims**

1. A low molecular weight copolymer salt of a copolymer acid comprised of at least 75 mol percent ethylene and from 0.2 to 25 mol percent of an alpha,beta-ethylenically unsaturated carboxylic acid, having from 3 to 8 carbon atoms, the copolymer acid being up to 100% neutralized with cations of metals selected from Group IIA of the Periodic Table of Elements, the copolymer acid having a number average molecular weight from 500 to 6000.

2. A copolymer salt according to claim 1 wherein the copolymer acid is a copolymer of ethylene and acrylic acid having a molecular weight of 1000 to 3500 and is neutralized with calcium or magnesium cations.

3. A method of making a copolymer salt from a copolymer acid having a number average molecular weight of 500 to 6000 formed from ethylene and an alpha,beta-ethylenically unsaturated carboxylic acid having at least one carboxylic acid group, the copolymer acid being neutralized by cations having a valence of 1 to 3, comprising the steps of:

feeding the copolymer acid and a cation containing material to a reaction vessel;
maintaining a subatmospheric pressure in the reaction vessel for at least a portion of the reaction time;
mixing the reacting mixture within the reaction vessel; and
maintaining the temperature within the reaction vessel above the melting point of the copolymer acid.

4. A method according to claim 3 wherein the reaction mixture is heated to from 120°C to 300°C after the feeding step.

5. A method according to claim 3 or 4 wherein an inert atmosphere is maintained within the reaction vessel.

6. A method according to claim 3, 4 or 5 wherein the reaction is conducted for at least one half of an hour reaction time.

7. A method according to any one of claims 3 to 6 wherein the alpha,beta-ethylenically unsaturated carboxylic acid has 3 to 8 carbon atoms.

8. A method according to any one of claims 3 to 7 wherein the molecular weight of the copolymer acid is from 1,000 to 3,500.

9. A method according to any one of claims 3 to 8 wherein the cations are calcium or magnesium cations.

10. A method according to any one of claims 3 to 9 wherein the alpha,beta-ethylenically unsaturated carboxylic acid is acrylic acid, methacrylic acid or crotonic acid.

11. A method according to any one of claims 3 to 10 wherein the copolymer acid is from 10% to 60% neutralized.

12. A composition comprising:

a polymer selected from polyolefins; styrene based polymers; polyamides; polyesters; polycarbonates; polyvinyl chloride; copolymers of acrylonitrile, butadiene, styrene; and phenolic resins;
up to 10 parts per hundred of the polymer of, as lubricant or dispersion aid, a copolymer salt as defined in any one of claims 3 and 7 to 11; and when the copolymer salt is employed as dispersion aid
from 0.1 to 100 parts per hundred of the polymer of a finely divided dispersible inert material.

**Patentansprüche**

1. Niedermolekulares Copolymersalz einer Copolymersäure mit wenigstens 75 Mol-% Ethylen und 0,2 bis 25 Mol-% einer α,β-ethylenisch ungesättigten Carbonsäure mit 3 bis 8 Kohlenstoffatomen, wobei die Copolymersäure bis zu 100% mit Kationen von Metallen aus der Gruppe IIA des Periodensystems der Elemente neutralisiert ist und die Copolymersäure ein mittleres Molekulargewicht (Zahlenmittel) von 500 bis 6000 hat.

21

2. Copolymersalz nach Anspruch 1, bei dem die Copolymersäure ein Copolymer von Ethylen und Acrylsäure mit einem Molekulargewicht von 1000 bis 3500 ist und mit Calcium- oder Magnesiumkationen neutralisiert ist.

3. Verfahren zur Herstellung eines Copolymersalzes aus einer Copolymersäure mit einem mittleren Molekulargewicht (Zahlenmittel) von 500 bis 6000, die aus Ethylen und einer α,β-ethylenisch ungesättigten Carbonsäure mit wenigstens einer Carbonsäuregruppe gebildet ist, wobei das Copolymer durch Kationen mit einer Wertigkeit von 1 bis 3 neutralisiert wird, mit den Stufen: eines Einspeisens von die Copolymersäure und ein Kation enthaltendem Material in einen Reaktionskessel, eines Aufrechterhaltens eines Überatmosphärendruckes in dem Reaktionskessel während wenigstens eines Teils der Reaktionszeit, eines Mischens des Reaktionsgemisches in dem Reaktionskessel und eines Aufrechterhaltens der Temperatur in dem Reaktionskessel oberhalb des Schmelzpunktes der Copolymersäure.

4. Verfahren nach Anspruch 3, bei dem das Reaktionsgemisch auf 120°C bis 300°C nach der Beschickungsstufe erhitzt wird.

5. Verfahren nach Anspruch 3 oder 4, bei dem eine inerte Atmosphäre in dem Reaktionskessel aufrechterhalten wird.

6. Verfahren nach Anspruch 3, 4 oder 5, bei dem die Reaktion während wenigstens einer halbstündigen Reaktionszeit durchgeführt wird.

7. Verfahren nach einem der Ansprüche 3 bis 6, bei dem die α,β-ethylenisch ungesättigte Carbonsäure 3 bis 8 Kohlenstoffatome hat.

8. Verfahren nach einem der Ansprüche 3 bis 7, bei dem das Molekulargewicht der Copolymersäure 1000 bis 3500 ist.

9. Verfahren nach einem der Ansprüche 3 bis 8, bei dem die Kationen Calcium- oder Magnesiumkationen sind.

10. Verfahren nach einem der Ansprüche 3 bis 9, bei dem die α,β-ethylenisch ungesättigte Carbonsäure Acrylsäure, Methacrylsäure oder Crotonsäure ist.

11. Verfahren nach einem der Ansprüche 3 bis 10, bei dem die Copolymersäure zu 10% bis 60% neutralisiert ist.

12. Zusammensetzung mit einem Polymer aus der Gruppe der Polyolefine, Polymere auf Styrolbasis, Polyamide, Polyester, Polycarbonate, Polyvinylchlorid, Acrylnitrilcopolymere, Butadien, Styrol und Phenolharze; bis zu 10 Teilen je 100 Teile des Polymers eines Copolymersalzes, wie es in einem der Ansprüche 3 und 7 bis 11 definiert ist, als Schmiermittel oder Dispersionshilfsmittel und, wenn das Copolymersalz als Dispersionshilfsmittel verwendet wird; 0,1 bis 100 Teilen je 100 Teile des Polymers eines feinteiligen dispergierbaren inerten Materials.

**Revendications**

1. Un sel de copolymère de poids moléculaire bas d'un acide copolymère constitué d'au moins 75 moles pour cent d'éthylène et de 0,2 à 25 moles pour cent d'un acide carboxylique à insaturation éthylénique—alpha, béta, ayant de 3 à 8 atomes de carbone, l'acide copolymère étant neutralisé jusqu'à 100 pour cent avec des cations de métaux choisis dans le groupe IIA de la Classification Périodique des Eléments, l'acide copolymère ayant un poids moléculaire numérique moyen de 500 à 6000.

2. Un sel de copolymère selon la revendication 1 dans lequel l'acide copolymère est un copolymère d'éthylène et d'acide acrylique, qui a un poids moléculaire de 1000 à 3500 et qui est neutralisé avec des cations calcium ou magnésium.

3. Un procédé de préparation d'un sel de copolymère à partir d'un acide copolymère qui a un poids moléculaire numérique moyen de 500 à 6000, formé à partir d'éthylène et d'un acide carboxylique à insaturation éthylénique—alpha, béta, qui a au moins un groupe acide carboxylique, l'acide copolymère étant neutralisé par des cations qui ont une valence de 1 à 3, comprenant les étapes suivantes:

— alimentation en acide copolymère et en matériau contenant des cations d'un récipient réactionnel;
— maintien d'une pression sous-atmosphérique dans le récipient réactionnel pendant au moins une portion du temps de réaction;
— mélange du mélange réactionnel au sein du récipient réactionnel; et
— maintien de la température au sein du récipient réactionnel au-dessus du point de fusion de l'acide copolymère.

4. Un procédé selon la revendication 3, dans lequel on chauffe le mélange réactionnel jusqu'à de 120°C à 300°C après l'étape d'alimentation.

5. Un procédé selon la revendication 3 ou 4, dans lequel on maintient une atmosphère inerte au sein du récipient réactionnel.

6. Un procédé selon la revendication 3, 4 ou 5, dans lequel on effectue la réaction pendant au moins une demi-heure du temps de réaction.

7. Un procédé selon l'une quelconque des revendications 3 à 6, dans lequel l'acide carboxylique à insaturation éthylénique—alpha,béta, a de 3 à 8 atomes de carbone.

22

8. Un procédé selon l'une quelconque des revendications 3 à 7 dans lequel le poids moléculaire de l'acide copolymère est de 1000 à 3500.

9. Un procédé selon l'une quelconque des revendications 3 à 8, dans lequel les cations sont des cations calcium ou magnésium.

10. Un procédé selon l'une quelconque des revendications 3 à 9 dans lequel l'acide carboxylique à insaturation éthylénique—alpha,béta, est l'acide acrylique, l'acide méthacrylique ou l'acide crotonique.

11. Un procédé selon l'une quelconque des revendications 3 à 10, dans lequel l'acide copolymère est neutralisé à entre 10 et 60%.

12. Une composition comprenant:

— un polymère choisi parmi les polyoléfines; les polymères à base de styrène; les polyamides; les polyesters; les polycarbonates; les chlorures de polyvinyle; les copolymères d'acrylonitrile, de butadiène, de styrène; et les résines phénoliques;

— jusqu'à 10 parties pour cent parties de polymère, comme lubrifiant ou agent de dispersion, d'un sel de copolymère tel qu'il est défini dans l'une quelconque des revendications 3 et 7 à 11; et lorsque le sel de copolymère est utilisé comme agent de dispersion

— de 0,1 à 100 parties pour cent parties de polymère d'un matériau inerte, dispersible, finement divisé.

FIG. 1

FIG. 2

FIG. 3

0 054 761